# EUROPEAN PATENT SPECIFICATION

(11) **EP 4 231 869 B1**
(45) Date of publication and mention of the grant of the patent: **29.10.2025**
(21) Application number: 20931813.8
(22) Date of filing: 05.11.2020
(51) Int. Cl.: A45C 11/00

(54) **A CASE STRUCTURE FOR MOBILE PHONE, TABLET, AND SIMILAR ELECTRONIC DEVICES**
GEHÄUSESTRUKTUR FÜR MOBILTELEFON, TABLET UND ÄHNLICHE ELEKTRONISCHE VORRICHTUNGEN
STRUCTURE D'ENVELOPPE POUR TÉLÉPHONE MOBILE, TABLETTE ET DISPOSITIFS ÉLECTRONIQUES SIMILAIRES

(30) Priority: 21.10.2020 TR 202016833
(43) Date of publication of application: 30.08.2023
(73) Proprietor: Elitas, Edip Ali, Cayyolu Cankaya / Ankara (TR)
(72) Inventor: Elitas, Edip Ali, Cayyolu Cankaya / Ankara (TR)
(74) Representative: Kaya, Esen
(86) International application number: PCT/TR2020/051046
(87) International publication number: WO 2021/216015

(56) References cited:
- CN-U- 205 831 325
- CN-U- 207 897 021
- CN-U- 209 517 261
- KR-A- 20170 090 771
- KR-B1- 101 693 120
- US-A1- 2017 194 997

## Description

### Technical Field

The invention relates to a case structure that provides protection of electronic devices such as mobile phones, tablets, laptops and the like against external factors.

The present invention relates to impact - absorbing particles, which are formed on the outer protective cover and mostly on its inner surface, have a shock - absorbing feature, preferably containing a spherical structure.

### Prior Art

As is known, the cases are protective materials used in the protection of electronic devices such as mobile phones, tablets, laptops, and the like against external factors. They have various visual designs according to their areas of use or their features, as well as different material and technical properties.

For example, in terms of material, polymer cases are produced from a single material (hard or soft), or by double injection method from elastomer inside and hard polymer material outside. The outer hard surface is protected against scratches, and the inner soft surface is used to absorb and disperse impact. In order for the case to stretch as the device is inserted into it, the elastomer channels are formed at the corners.

Another problem experienced in the current technique is that the laminated elastomer and hard polymer, which are adhered to each other, show different expansion properties in hot climates and with humidity. Elastomer parts (in places such as button edges, socket edges) become loose, therefore it looks both aesthetically bad and undergoes deformations that will affect the function such as rupture or tearing.

In the patent research conducted on the Prior Art, a patent with number CN105452128B has been found. In this patent application, multiple shock - absorbing surfaces have been created on the inner surface of the case and in the designated areas.

Another application is US Patent no. US20150001104. This patent application also includes impact absorbing surfaces formed on the inner surface of the case similar to the said above Chinese patent. The surfaces used here are impact - absorbing surfaces that extend along the inner surface of the phone.

The case presented in the patent application numbered USD606305S1 contains impact absorbing protrusions formed on both the outer and inner surfaces. The impact - absorbing protrusions revealed in this application have a long structure and protects the phone against external factors. KR20170090771 also discloses a device case with impact absorbing tiny balls.

### Description of the Invention

The invention is intended to produce a case with different technical features which, unlike the case structures used in the present market, that bring new development to this area.

The most important purpose of the invention is to protect the phone and similar electronic devices from the effects of damaging physical actions such as dropping or crashing.

Another purpose of the invention is to create a surface by combining elastomer, ie soft polymer materials in the form of tiny balls, to the surfaces that will contact the phone or device on the inner surface of the case. Thus, each of these balls has a separate damping feature to increase the ability to absorb impact.

The other purpose of the invention is to obtain the surface by combining elastomer i.e. soft polymer materials in tiny balls on the outer surfaces of the case, not just the inner surface of it, and to absorb the impacts with the individual damping feature of each of these balls.

Another purpose of the invention is to create elastomer channels near corners on long edges to make it easier for the phone or device to be placed in the case. Thus, thanks to the channels created in the area where the resistance is low, the device is placed in the case more easily with less force.

In order to fulfill the purposes described above, the invention is a device according to claim 1.

### Brief Description of the Figures

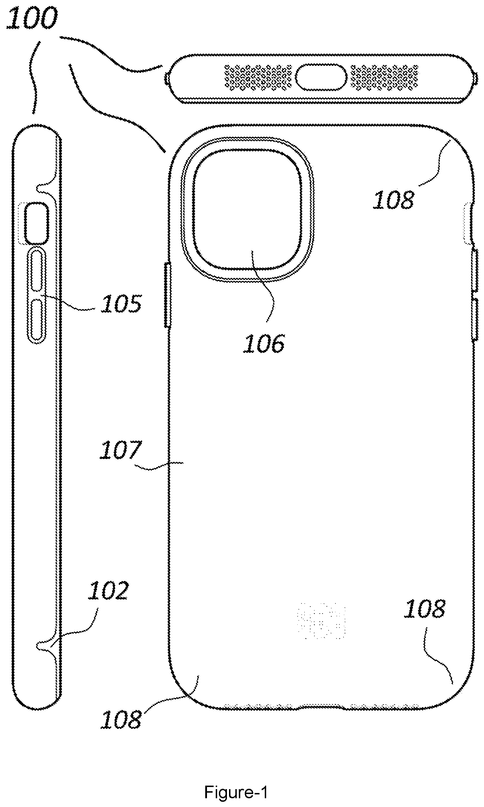

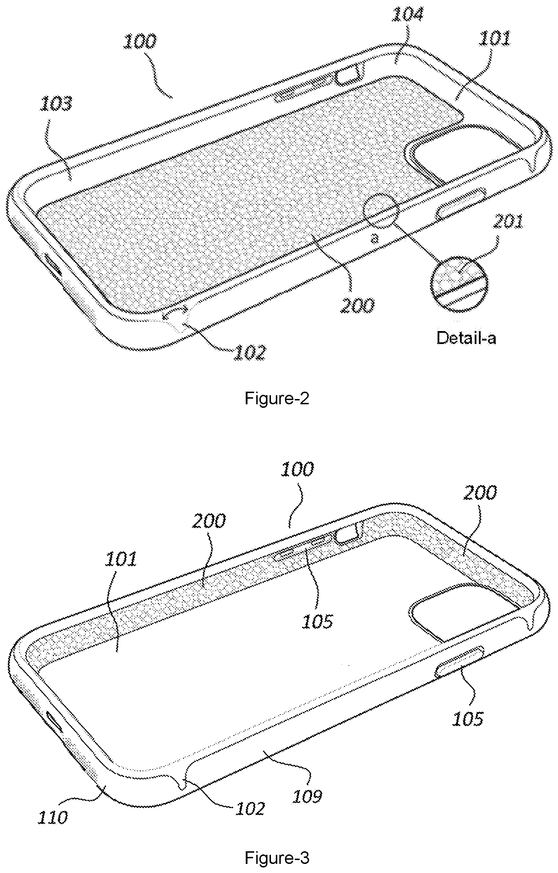

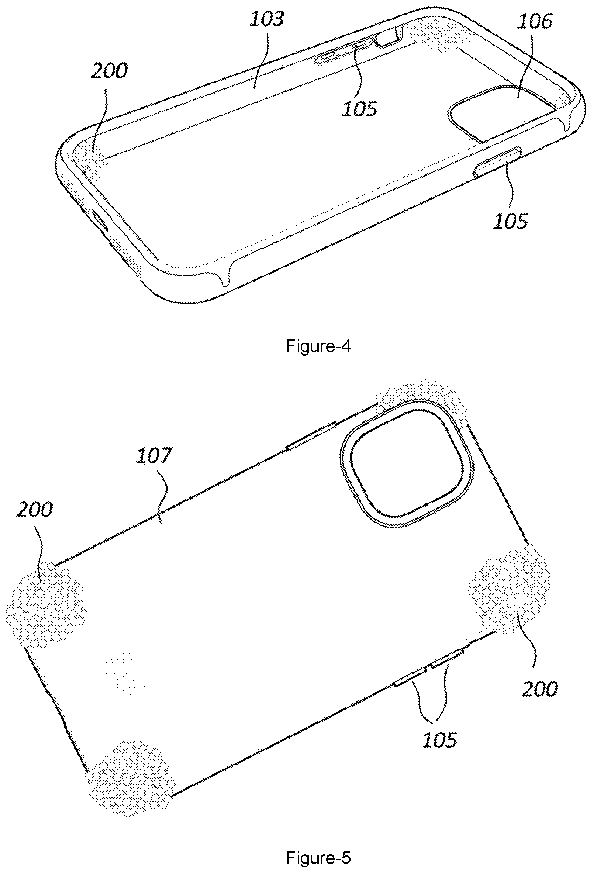

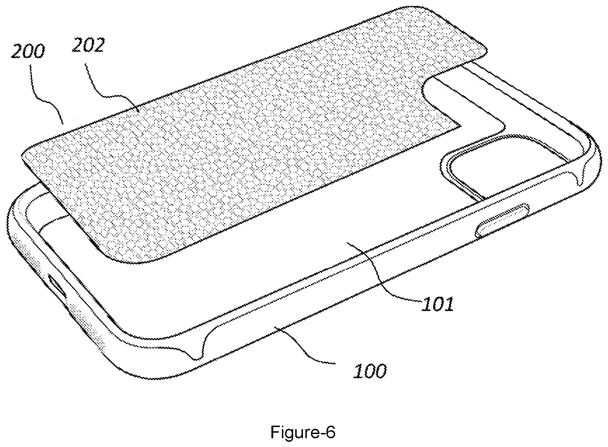

- Figure 1;: is the two - dimensional view of the three views of the case of the invention.
- Figure - 2;: is a general view of the case of the invention as impact absorbing materials are placed on the inner surface.
- Figure - 3;: is a general view of the case of the invention as impact - absorbing materials are placed on the inner edge surfaces.
- Figure - 4;: is a general view of the case of the invention as impact - absorbing materials are placed on the inner corner edge surface.
- Figure - 5;: is a general view of the case of the invention as impact - absorbing materials are placed on the outer corner edge surfaces.
- Figure - 6:: The plate form of the impact - absorbing material and the disassembled view of the shape to be adapted to the inner surface.

### Reference Numbers

- 100: Device case
- 101: Inner surface
- 102: Stretching hole
- 103: Inner edge surfaces
- 104: Inner corner surfaces
- 105: Modular buttons
- 106: Camera hole
- 107: Outer surface
- 108: Outer corner surfaces
- 109: Long edge
- 110: Short edge
- 200: Impact absorber
- 201: Tiny balls
- 202: Plate form

### Detailed Description Of The Invention

With the invention, a device case (100) that provides protection of electronic devices such as mobile phones, tablets, laptops, and the like against external factors is explained. The device case (100) comprises a impact absorber (200) built on the inner surface (101) and / or outer surface (107). This impact absorber (200) material is formed of a multiple number of tiny balls (201), and these tiny balls (201) have a flexible, preferably spherical structure.

The said impact absorber (200) are tiny balls (201) that are adapted by laying or by spreading method on the inner surface (101) and / or the outer surface (107) of the device case (100) during the production phase. It is possible that these tiny balls (201) can be adapted to the surface (101) or outer surface (107) of the device case (100) by pouring or laying on the surface during the production phase, and it is also possible to form a layer adjacent and close to the tiny balls (201) and to adapt this layer to the case by cutting it to the desired dimensions. In this way, a plate form (202) is obtained that allows the impact absorber (200) to be adapted as a whole layer on the inner surface (101) and / or the outer surface (107) of the device case (100).

In Figure - 2, the impact absorber (200) of the invention is adapted to the inner surface (101) of the device case (100). The tiny balls (201), which are fully spread on the inner surface (101) and adapted to this area, are composed of small flexible balls of spherical structure as stated in detail a. It shows a superior suspense effect between the case and the device, highly preventing damage to the device from impact. At the same time, it has a feature that is highly appealing and can be the center of attention of the consumer visually. The tiny balls (201) can be of different colors as desired. Thus, it is possible to obtain country flag colors, sports team colors and combinations of different colors.

In Figure - 3, the view of the inner surface (101) of the shock absorber (200) device case (100) adapted to the inner edge surfaces (103) is illustrated. The stretching hole (102) is formed on the long edge (109) of the device case (100) but also close to the short edge (110). The stretching hole (102) stretches while the phone or device is placed in the case, so that the device is placed into the case easily and effortlessly. Also, modular buttons (105) are created on the long edges of the case (109). Modular buttons (105) are available in different colors according to the preference.

In Figures - 4 and 5, the appearance of the shock absorber (200) device case (100) adapted to the inner corner surfaces (104) and outer corner surfaces (108) is illustrated. The impact absorber (200) can generally be fixed to the inner and outer surfaces of the device case (100) by bonding or thermal technique or using different techniques.

In Figure - 6, the impact absorber (200) tiny balls (201) is layered and then the appearance of adapting to the inner surface of the case is illustrated. The shock absorber (200) in the form of a layer is fixed to the inner surface of the case by bonding technique after it is cut in rolls and then in accordance with the inner surface of the case.

On the other hand, the outer surface (107) and / or outer corner surfaces (108) of the device case (100) contain transparent surfaces. Because these surfaces are transparent surfaces, the tiny balls (201) remaining inside will be visible from outside and a product with a high charm and design will be obtained. Also, the said impact absorber (200) tiny balls (201) may comprise the company logo, football and / or different sports team emblems, and plate form (202) layer with different visuals and shapes. Thus, it is also possible for people to individually provide this shaped plate form (202) layer which is produced in various ways according to their preferences and to adhere to their cases by themselves.

## Claims

1. A device case (100) suitable for providing protection for electronic devices such as mobile phones, tablets, laptops, and the like against external factors, comprising an inner surface (101), an outer surface (107), inner edge surfaces (103) and outer corner surfaces (108), wherein the said device case (100) comprises
• impact absorbers (200) having multiple tiny balls (201) formed on the inner surface (101) and / or outer surface (107),
**characterized in that** the said device case (100) comprises
• a stretching hole (102) that is formed on a long edge (109) of the device case (100) but also close to a short edge (110).

2. A device case (100) according to Claim 1, wherein the said tiny balls (201) have a flexible spherical structure.

3. A device case (100) according to Claim 1, wherein the said impact absorber (200) comprises tiny balls (201) that are adapted by laying or by spreading method on the inner surface (101) and / or the outer surface (107) of the device case (100) during the production phase.

4. A device case (100) according to Claim 1, comprising a plate form (202) of the said impact absorber (200) that allows the impact absorber (200) to be adapted as a whole layer on the inner surface (101) and / or the outer surface (107) of the device case (100).

5. A device case (100) according to Claim 1, wherein the outer surface (107) and / or outer corner surfaces (108) of the device case (100) comprises transparent surfaces so that tiny balls (201) can be seen.

6. A device case (100) according to Claim 3, wherein the said impact absorber (200) tiny balls (201) comprises a plate form (202) layer containing logos, emblems, and different images and shapes.

## Patentansprüche

1. Vorrichtungsgehäuse (100), das dazu geeignet ist, Schutz für elektronische Vorrichtungen wie z. B. Mobiltelefone, Tablets, Laptops und dergleichen gegen externe Faktoren zu bieten, umfassend eine Innenfläche (101), eine Außenfläche (107), Innenkantenflächen (103) und äußere Eckflächen (108), wobei das Vorrichtungsgehäuse (100) Folgendes umfasst
• Aufpralldämpfer (200) mit multiplen winzigen Kugeln (201), die auf der Innenfläche (101) und / oder Außenfläche (107) gebildet sind, **dadurch gekennzeichnet, dass** das Vorrichtungsgehäuse (100)
• ein Dehnungsloch (102) umfasst, das an einer langen Kante (109) des Vorrichtungsgehäuses (100), aber auch nahe einer kurzen Kante (110) gebildet ist.

2. Vorrichtungsgehäuse (100) nach Anspruch 1, wobei die winzigen Kugeln (201) eine flexible, kugelförmige Struktur aufweisen.

3. Vorrichtungsgehäuse (100) nach Anspruch 1, wobei der Aufpralldämpfer (200) winzige Kugeln (201) umfasst, die durch Legen oder durch Ausbreitungsverfahren auf der Innenfläche (101) und / oder der Außenfläche (107) des Vorrichtungsgehäuses (100) während der Produktionsphase angepasst werden.

4. Vorrichtungsgehäuse (100) nach Anspruch 1, umfassend eine Plattenform (202) des Aufpralldämpfers (200), die es ermöglicht, den Aufpralldämpfer (200) als eine ganze Schicht auf der Innenfläche (101) und / oder der Außenfläche (107) des Vorrichtungsgehäuses (100) anzupassen.

5. Vorrichtungsgehäuse (100) nach Anspruch 1, wobei die Außenfläche (107) und / oder äußeren Eckflächen (108) des Vorrichtungsgehäuses (100) transparente Flächen umfasst bzw. umfassen, sodass winzige Kugeln (201) zu sehen sind.

6. Vorrichtungsgehäuse (100) nach Anspruch 3, wobei die winzigen Kugeln (201) des Aufpralldämpfers (200) eine plattenförmige (202) Schicht umfassen, die Logos, Embleme und verschiedene Bilder und Formen enthält.

## Revendications

1. Enveloppe de dispositif (100) appropriée pour fournir une protection à des dispositifs électroniques tels que des téléphones mobiles, tablettes, ordinateurs portables et similaires contre des facteurs externes, comprenant une surface intérieure (101), une surface extérieure (107), des surfaces de bords intérieures (103) et des surfaces de coins extérieures (108),
dans laquelle ladite enveloppe de dispositif (100) comprend
• des amortisseurs de chocs (200) ayant de multiples minuscules billes (201) formées sur la surface intérieure (101) et / ou la surface extérieure (107),
**caractérisée en ce que** ladite enveloppe de dispositif (100) comprend
• un trou d'étirement (102) qui est formé sur un bord long (109) de l'enveloppe de dispositif (100) mais également à proximité d'un bord court (110).

2. Enveloppe de dispositif (100) selon la revendication 1, dans laquelle lesdites minuscules billes (201) ont une structure sphérique souple.

3. Enveloppe de dispositif (100) selon la revendication 1, dans laquelle ledit amortisseur de chocs (200) comprend de minuscules billes (201) qui sont adaptées par un procédé de pose ou d'étalement sur la surface intérieure (101) et / ou la surface extérieure (107) de l'enveloppe de dispositif (100) pendant la phase de production.

4. Enveloppe de dispositif (100) selon la revendication 1, comprenant une forme de plaque (202) dudit amortisseur de chocs (200) qui permet à l'amortisseur de chocs (200) d'être adapté en tant que couche entière sur la surface intérieure (101) et / ou la surface extérieure (107) de l'enveloppe de dispositif (100).

5. Enveloppe de dispositif (100) selon la revendication 1, dans laquelle la surface extérieure (107) et / ou les surfaces de coins extérieures (108) de l'enveloppe de dispositif (100) comprennent des surfaces transparentes de sorte que les minuscules billes (201) puissent être vues.

6. Enveloppe de dispositif (100) selon la revendication 3, dans laquelle lesdites minuscules billes (201) d'amortisseur de chocs (200) comprennent une couche en forme de plaque (202) contenant des logos, des emblèmes et différentes images et formes.
